# FASCICULE DE BREVET EUROPEEN

(11) **EP 2 153 265 B1**
(45) Date de publication et mention de la délivrance du brevet: **05.03.2014**
(21) Numéro de dépôt: 08749317.7
(22) Date de dépôt: 05.05.2008
(51) Int. Cl.: G02B 27/01, B60K 35/00

(54) **DISPOSITIF D'AFFICHAGE**
ANZEIGEVORRICHTUNG
DISPLAY DEVICE

(30) Priorité: 04.05.2007 DE 102007021516
(43) Date de publication de la demande: 17.02.2010
(73) Titulaire: Johnson Controls GmbH, 51399 Burscheid (DE)
(72) Inventeur: MONTAROU, Laurent, F-75018 Paris (FR); LUNEAU, Olivier, F-95430 Auvers sur Oise (FR); ARNOULD, Robert, F-63260 Sardon (FR)
(74) Mandataire: Schwöbel, Thilo K.
(86) Numéro de dépôt international: PCT/EP2008/003588
(87) Numéro de publication internationale: WO 2008/135261

(56) Documents cités:
- EP-A1- 2 066 531
- WO-A-2008/063632
- DE-A1-102006 042 693
- DE-B3-102005 023 578
- US-A- 3 802 764

## Description

La présente invention concerne un dispositif d'affichage, notamment pour un véhicule automobile et notamment de type affichage tête haute.

Des dispositifs d'affichage, notamment des dispositifs d'affichage tête haute, sont connus, par exemple de la demande de brevet allemande DE 197 22 944 A1 ou des publications WO 2008/063632 A, l'état de la technique selon l'article 54(3) CBE, et EP2 066 531 A. Ces publications proposent de réaliser un dispositif d'affichage de type tête haute avec un miroir dépliant.

WO2008/063632A découle un dispositif d'affichage tête haute, notamment pour véhicule automobile, comprenant un élément dépliant, le dispositif d'affichage comprenant un élément de montage prévu pour permettre la fixation de l'élément dépliant dans au moins une première position inactive et dans au moins une deuxième position déployée, le dispositif d'affichage étant prévu de sorte que l'élément dépliant suit un mouvement de l'élément dépliant entre ses première et deuxième positions, le mouvement de l'élément dépliant comprenant au moins partiellement une part translative et une part rotative.

Un inconvénient d'un tel dispositif selon l'art connu consiste dans le transfert de perturbations, notamment de vibrations, sur un tel miroir dépliant.

La présente invention a notamment pour but de pallier aux inconvénients de l'art connu, et notamment ceux cités ci-dessus, et a également pour but de proposer un dispositif d'affichage ou de fixation non seulement stable et robuste mais encore avec un faible poids et avec un espace nécessaire réduit qui peut être produit de façon simple et efficace et à un coût réduit.

Suivant l'invention, ce but est atteint par un dispositif d'affichage tête haute selon la revendication 1.

Par une telle réalisation du dispositif d'affichage ou le dispositif de fixation, il est avantageusement possible de positionner l'élément dépliant - notamment un miroir- de la première position (inactive ou « repos ») vers une deuxième position (déployée ou « travail ») et vice versa avec un mouvement combiné translation-rotation.

Dans le contexte de la présente invention, le dispositif de fixation est utilisé dans une composante de véhicule pour retenir ou attacher un élément de façon résistante par rapport à des perturbations extérieures - notamment les perturbations mécaniques ou vibratoires. Le dispositif de fixation selon l'invention est notamment utilisé pour réaliser un dispositif d'affichage, par exemple pour une affichage tête haute (ATH) ou collimateur tête haute (CTH) ou visualisation tête haute (VTH).

Toutefois, l'invention peut aussi être appliquée à d'autres composantes de véhicule pour retenir ou attacher un élément dépliant, par exemple des éléments de pare-soleil, des éléments de rétroviseur extérieur d'automobile, des éléments d'affichage de type écran pour une caméra de marche arrière et d'autres choses semblables. De telles éléments dépliants, notamment un miroir dépliant, sont prévus pour être retenus de façon suffisamment stable et d'une manière répétitive dans une pluralité de positions, notamment dans au moins une position d'arrêt ou inactive (position de repos ou première position) et dans au moins une position déployée (position de travail ou deuxième position).

Selon l'invention l'élément de montage comprend un élément élastique et un élément de positionnement, l'élément élastique exerçant une force d'appui entre l'élément dépliant d'un côté et l'élément de positionnement de l'autre côté. De par une telle réalisation, il est avantageusement possible de garantir la stabilité de l'élément dépliant ou alors du miroir dépliant en position déployée par un simple élément élastique - par exemple de type ressort métallique ou ressort élastomère. De par un tel élément élastique, il est également possible de largement éviter des bruissements (par exemple de type cliquetis liés par exemple à des vibrations de véhicule) lorsque l'élément dépliant est positionné dans sa première et/ou dans sa deuxième position. De façon préférée, il est prévu que l'élément élastique engendre une tension de l'élément dépliant contre une butée de façon à ce que le positionnement de l'élément dépliant dans sa première et deuxième position puisse être réalisé avec une grande précision et répétabilité malgré une utilisation du dispositif d'affichage ou de fixation dans un environnement de véhicule avec des influences externes mécaniques, thermiques et/ou chimiques comme par exemple des vibrations mécaniques, des interventions mécaniques d'un utilisateur, des fluctuations de température, et des milieux chimiques agressifs.

Selon encore un autre mode de réalisation préféré, l'élément de positionnement suit un mouvement essentiellement translatif entre les première et deuxième positions de l'élément dépliant, notamment un mouvement translatif le long d'une tige filetée. De par une telle réalisation, le mouvement du miroir dépliant ou de l'élément dépliant peut se faire par un mouvement non seulement très simple et très fiable de l'élément de positionnement, mais encore de façon comparativement rapide.

Un perfectionnement préféré de l'invention réside encore dans le fait que l'élément de positionnement a un premier lien articulé avec l'élément dépliant. De par une telle réalisation, le mouvement combiné translation-rotation de l'élément dépliant lors du mouvement de l'élément de positionnement peut être réalisé de façon simple et robuste.

Selon encore un autre mode de réalisation préféré, l'élément de montage comprend un premier élément de guidage, notamment en forme de rampe, et en ce que l'élément de montage comprend un deuxième élément de guidage, notamment en forme de galet. Un perfectionnement préféré de l'invention réside encore dans le fait que l'élément de montage comprend un troisième élément de guidage, notamment en forme de goujon d'accrochage, et en ce que l'élément de montage comprend un quatrième élément de guidage, notamment en forme de crochet. De par une telle réalisation, il est possible de définir le mouvement de l'élément dépliant en fonction du mouvement de l'élément de positionnement d'une manière simple et précise.

Selon encore un autre mode de réalisation préféré, le deuxième élément de guidage a un deuxième lien articulé avec l'élément dépliant et/ou le quatrième élément de guidage a un troisième lien articulé avec l'élément dépliant. De par une telle réalisation, un mouvement souple de l'élément dépliant est possible de façon simple.

Un perfectionnement préféré de l'invention réside encore dans le fait que le mouvement de l'élément dépliant a une part rotative moins importante et une part translative plus importante près de la première position de l'élément dépliant et que le mouvement de l'élément dépliant a une part rotative plus importante et une part translative moins importante près de la deuxième position de l'élément dépliant. De par une telle réalisation, il est possible que l'espace nécessaire pour réaliser le mouvement de l'élément dépliant peut être réduit.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue perspective et détaillée sur un dispositif d'affichage selon un premier mode de réalisation de la présente invention,
les figures 2 à 5 sont des vues de côté du dispositif d'affichage selon le premier mode de réalisation de la présente invention,
les figures 6 à 15 sont des vues perspectives sur un dispositif d'affichage selon un deuxième mode de réalisation de la présente invention,
les figures 16 à 18 sont des vues de côté du dispositif d'affichage selon le deuxième mode de réalisation de la présente invention.

### DESCRIPTION DES DESSINS

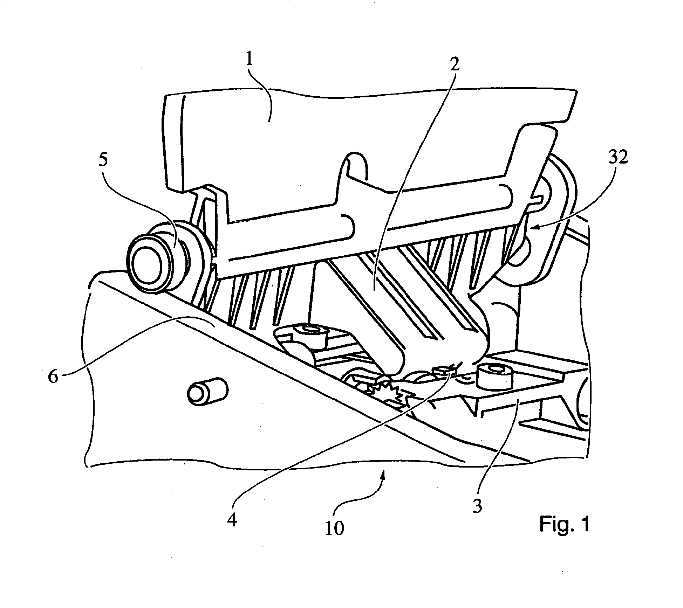

Les figures 1 à 18 montrent différentes vues d'un dispositif d'affichage selon un premier et un deuxième mode de réalisation de la présente invention. Le dispositif d'affichage selon les deux modes de réalisation est un exemple d'un dispositif de fixation selon la présente invention. Le dispositif d'affichage comprend un miroir dépliant 1. Le miroir dépliant 1 est un exemple d'un élément dépliant 1. D'autres exemples pour l'élément dépliant 1 comprennent un pare-soleil, un rétroviseur extérieur d'automobile ou alors un élément d'affichage de type écran pour une caméra de marche arrière.

Le dispositif d'affichage comprend un élément de montage 10 prévu pour permettre la fixation de l'élément dépliant 1 dans au moins une première position et au moins une deuxième position. L'élément de montage 10 comprend un élément de positionnement 3 et un élément élastique 4. L'élément élastique 4 exerce une force d'appui entre l'élément dépliant 1 d'un côté et l'élément de positionnement 3 de l'autre côté. De par l'action de l'élément élastique 4, une tension est engendré sur l'élément dépliant 1 de façon à ce que l'élément dépliant bute contre une butée (non représentée dans les figures) de façon à ce que le positionnement de l'élément dépliant dans sa première et deuxième position puisse être réalisé avec une grande précision et répétabilité malgré une utilisation du dispositif d'affichage ou de fixation dans un environnement de véhicule.

L'élément de positionnement 3 est notamment réalisé en tant qu'actuateur linéaire, par exemple en tant que chariot de positionnement. L'élément élastique 4 est réalisé par exemple sous forme de ressort métallique ou de matériau élastomère, notamment sous forme d'un matériau plastique élastomère ou sous forme d'une combinaison d'un ressort métallique avec un matériau plastique élastomère.

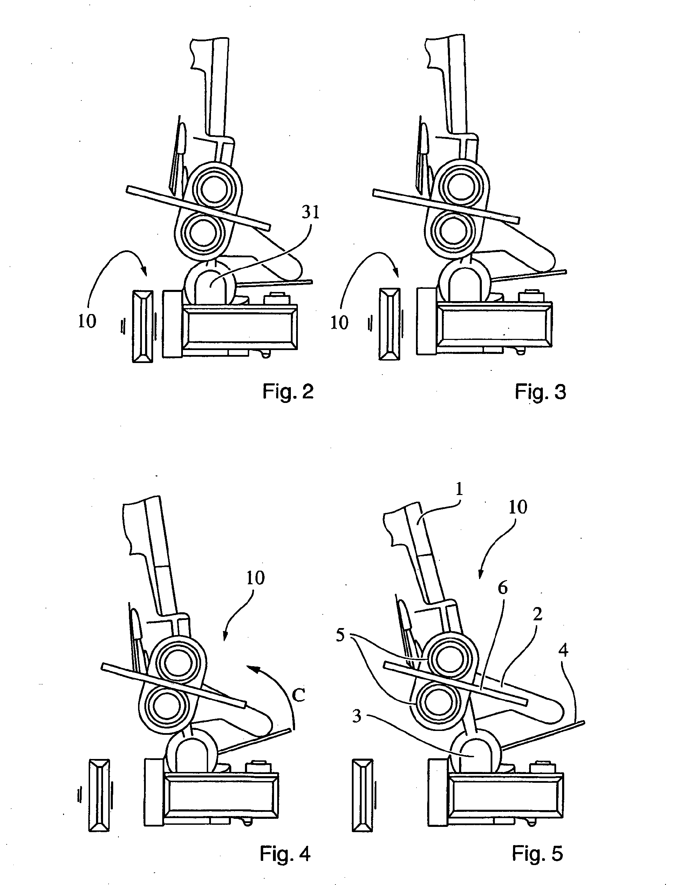

La figure 1 montre une vue perspective et détaillée du dispositif d'affichage selon le premier mode de réalisation de la présente invention, et les figures 2 à 5 sont des vues de côté. Dans son premier mode de réalisation, le miroir dépliant 1 ou l'élément dépliant 1 comprend un élément d'appui 2 qui interagit avec l'élément de positionnement 3 et avec l'élément élastique 4. L'élément de montage 10 comprend un premier élément de guidage 6, notamment sous forme d'une rampe. L'élément de montage 10 comprend en outre un deuxième élément de guidage 5, notamment sous forme d'un galet ou sous forme de deux galets (voir figures 2 à 5). Le mouvement de l'élément dépliant 1 est défini par au moins le premier élément de guidage 6 et le deuxième élément de guidage 5 de sorte que le mouvement de l'élément dépliant 1 comprenne au moins partiellement une part translative et une part rotative. Le premier élément de guidage 6 interagit avec le deuxième élément de guidage 5 de façon à définir un angle d'inclinaison de l'élément dépliant 1 pour chaque position linéaire de l'élément de positionnement 3. Pour cela, un premier lien articulé 31 (représenté uniquement dans la figure 2) est prévu entre l'élément de positionnement 3 et l'élément dépliant 1 et un deuxième lien articulé 32 (représenté uniquement dans la figure 1) est prévu entre le deuxième élément de guidage 5 et l'élément dépliant 1.

L'élément élastique 4 exerce un couple (signe de référence C dans la figure 4) sur l'élément dépliant 1 contre une butée non représentée. A travers d'une telle réalisation, une compensation de jeu relative au positionnement de l'élément dépliant 1 est possible. Il s'ensuit que par exemple des vibrations mécaniques ont une influence réduite sur le positionnement de l'élément dépliant 1. Par ailleurs, il est ainsi possible que l'élément dépliant 1 peut être positionné dans différentes positions adaptées individuellement à l'utilisateur et que ces positions correspondent tous à des positions déployées de l'élément dépliant 1. L'élément élastique 4 peut être détendu lors du mouvement de l'élément de positionnement 3 vers sa position correspondant à la première position (de repos) de l'élément dépliant 1 (voir la figure 5).

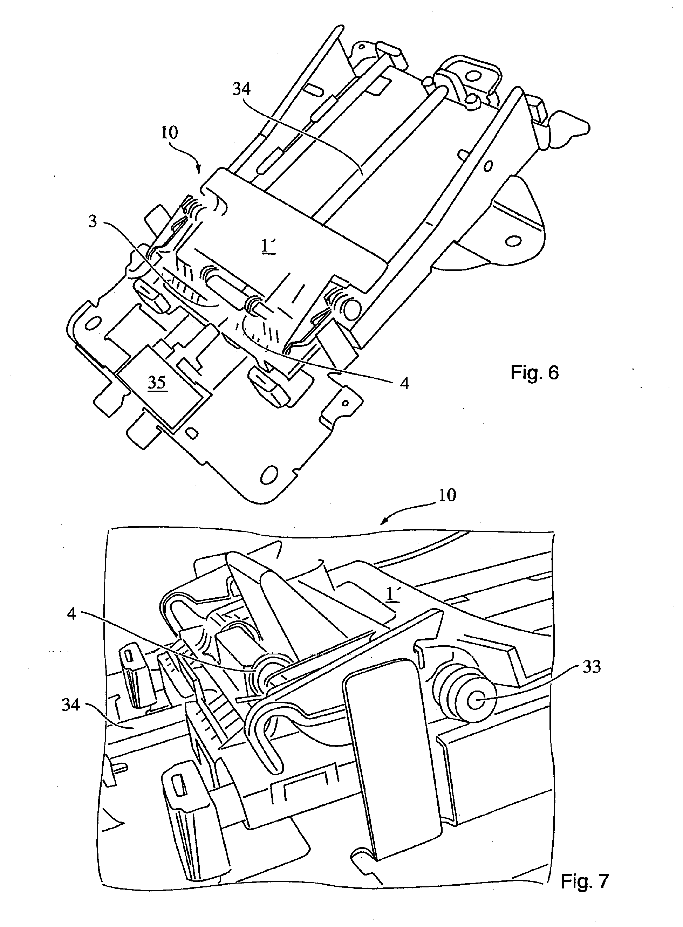

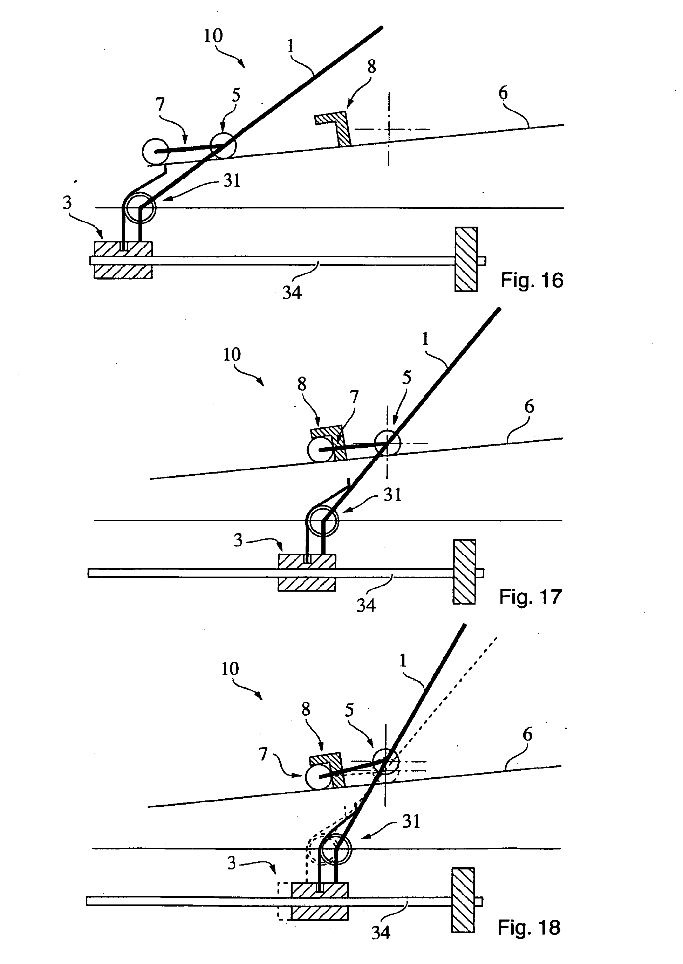

Les figures 6 à 15 montrent des vues perspectives sur un dispositif d'affichage selon un deuxième mode de réalisation de la présente invention, et les figures 16 à 18 sont des vues de côté.

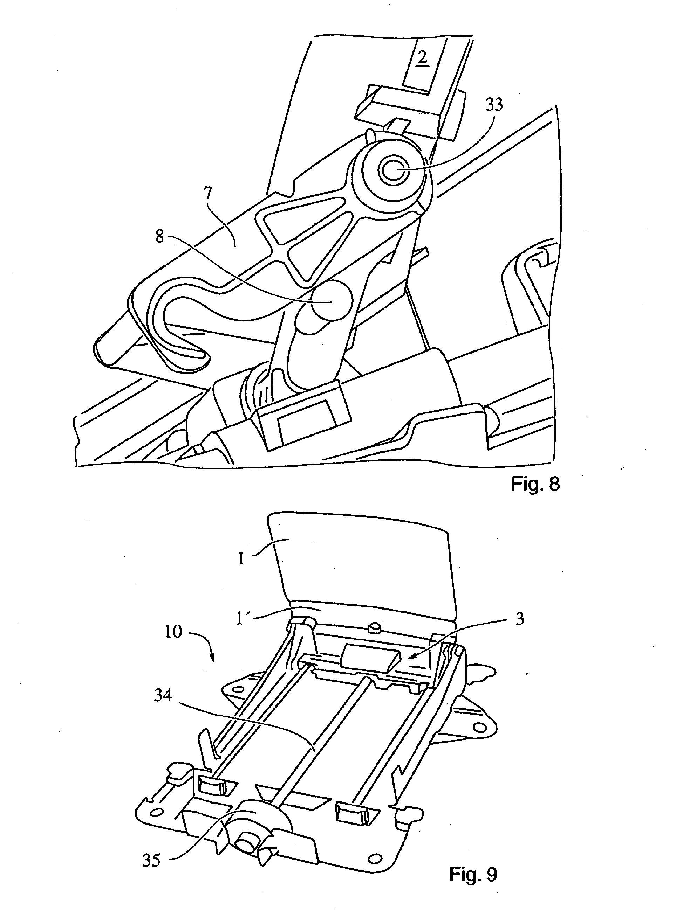

Les figures 6 et 9 montrent une vue sur l'ensemble de l'élément de montage 10. L'élément de montage 10 comprend l'élément de positionnement 3, l'élément élastique 4, un support 1' pour être attaché avec l'élément dépliant 1, une tige filetée 34 et un élément d'entraînement 35, notamment un moteur électrique.

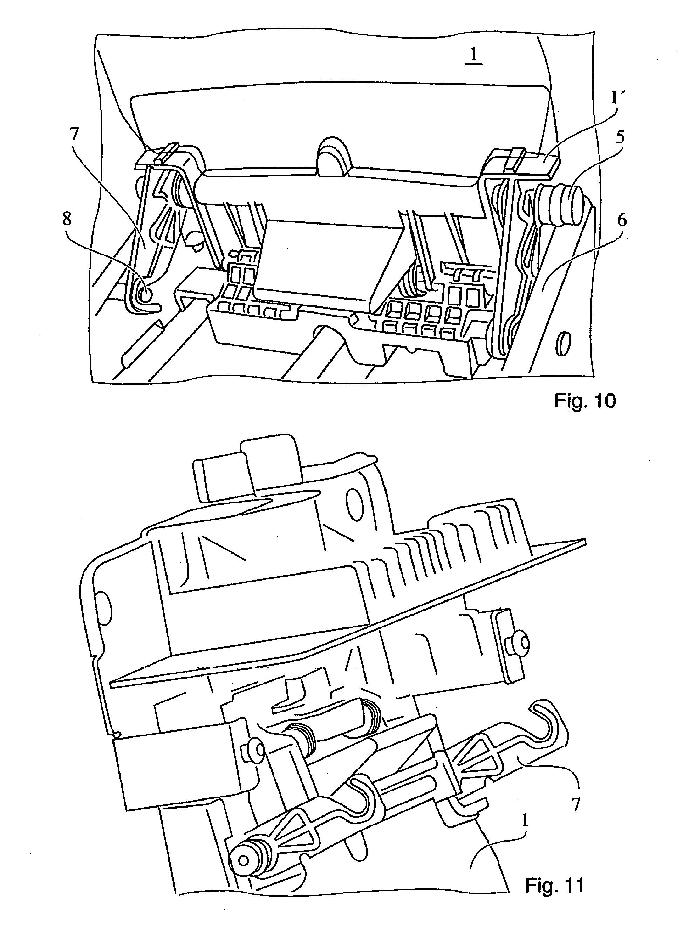

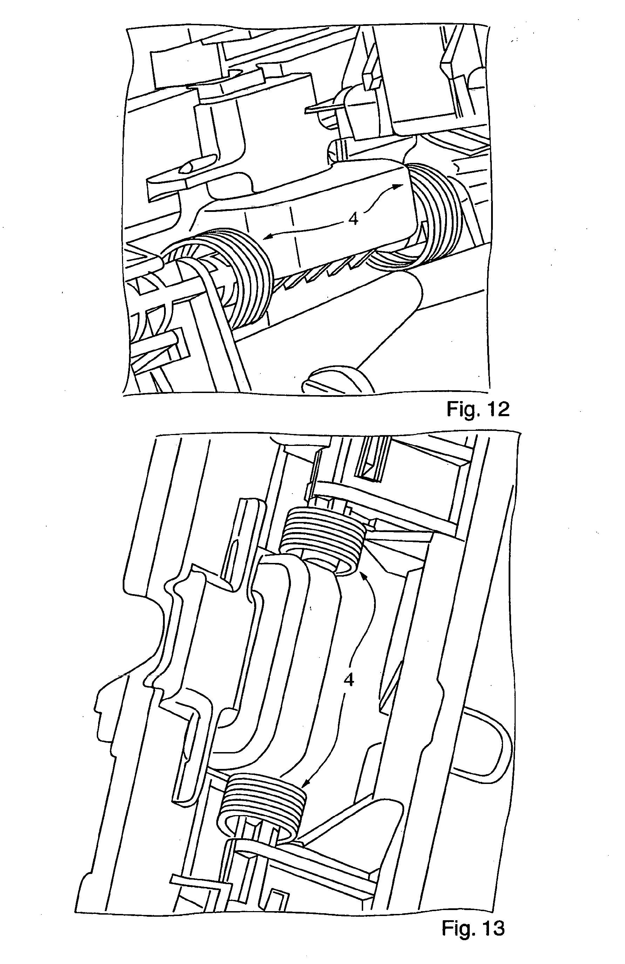

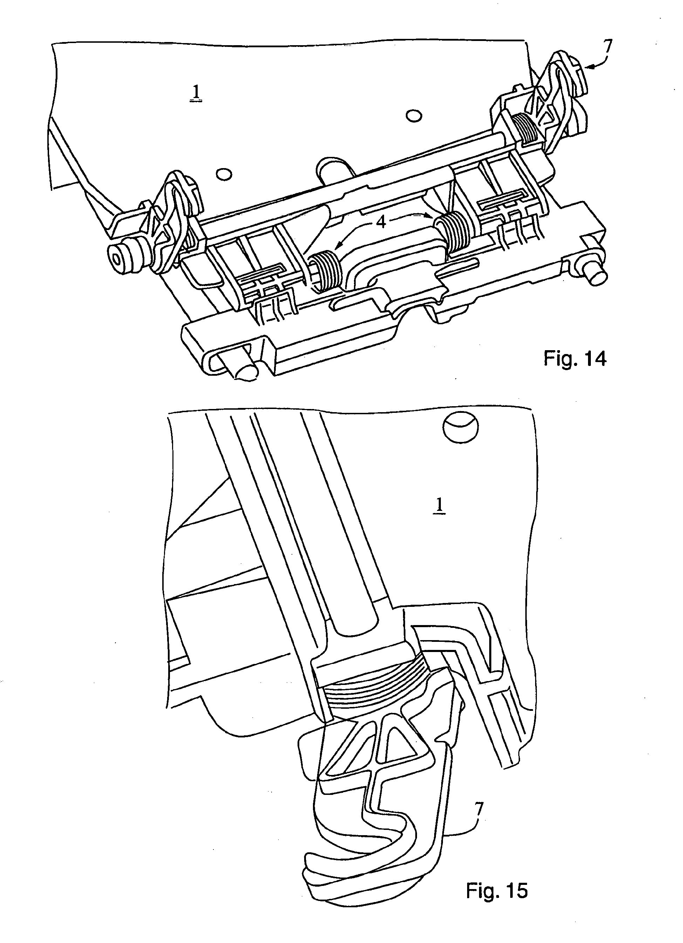

Les figures 7, 8 et 10 à 15 montrent des vues détaillées de l'élément de montage 10. Ces représentations montrent que dans le dispositif d'affichage selon le deuxième mode de réalisation, l'élément de montage 10 comprend (en outre le premier et deuxième élément de guidage) un troisième élément de guidage 8, notamment sous forme d'un goujon d'accrochage (voir figure 8). L'élément de montage 10 comprend en outre un quatrième élément de guidage 7, notamment sous forme d'un crochet (voir figures 7 et 8). Le mouvement de l'élément dépliant 1 est défini par le premier élément de guidage 6 et le deuxième élément de guidage 5 dans une première région de mouvement de l'élément dépliant 1 (ou alors une première région de mouvement de l'élément de positionnement 3) de sorte que le mouvement de l'élément dépliant 1 comprenne au moins partiellement une part translative et une part rotative. Par ailleurs, le mouvement de l'élément dépliant 1 est défini par le troisième élément de guidage 8 et le quatrième élément de guidage 7 dans une deuxième région de mouvement de l'élément dépliant 1 (ou alors une première région de mouvement de l'élément de positionnement 3) de sorte que le mouvement de l'élément dépliant 1 comprenne au moins partiellement une part translative et une part rotative. Le troisième élément de guidage 8 interagit avec le quatrième élément de guidage 7 de façon à définir un angle d'inclinaison de l'élément dépliant 1 pour chaque position linéaire de l'élément de positionnement 3. Pour cela, un troisième lien articulé 33 (représenté dans les figures 7 et 8) est prévu entre le quatrième élément de guidage 7 et l'élément dépliant 1. Dans la figure 10, la deuxième position de l'élément dépliant 1 est représentée. Les éléments de guidage 5, 6, 7, 8 sont visibles. Le troisième et quatrième élément de guidage 7, 8 coopèrent pour soulever le deuxième élément de guidage (galet) 5 du premier élélement de guidage (rampe) 6. Dans la figure 11, le quatrième élément de guidage 7 et l'élément dépliant 1 est visible. Les figures 12 et 13 montrent en détail l'élément élastique 4 représenté sous forme de ressort métallique. Les figures 14 et 15 montrent surtout le quatrième élément de guidage 7 dans la première position (de repos) de l'élément dépliant 1.

Les figures 16 à 18 sont des vues de côté du dispositif d'affichage selon le deuxième mode de réalisation de la présente invention. Les figures 16 à 18 montrent comment les éléments de guidage 5, 6, 7, 8 définissent le mouvement de l'élément dépliant 1 en fonction du mouvement de l'élément de positionnement 3. La figure 16 montre la première position de l'élément dépliant 1. La Figure 18 montre la deuxième position de l'élément dépliant 1. La figure 17 montre une position intermédiaire entre la première et la deuxième position de l'élément dépliant 1 lorsque le quatrième élément de guidage 7 commence à interagir avec le troisième élément de guidage 8.

### LISTE DES SIGNES DE REFERENCE

- 1: élément dépliant
- 1': support pour l'élément dépliant
- 2: élément d'appui
- 3: élément de positionnement
- 4: élément élastique
- 5: deuxième élément de guidage / galet
- 6: premier élément de guidage / rampe
- 7: quatrième élément de guidage / crochet
- 8: troisième élément de guidage / goujon d'accrochage
- 10: élément de montage
- 31: premier lien articulé
- 32: deuxième lien articulé
- 33: troisième lien articulé
- 34: tige filetée
- 35: élément d'entraînement

## Revendications

1. Dispositif d'affichage tête haute, notamment pour véhicule automobile, comprenant un élément dépliant (1), le dispositif d'affichage comprenant un élément de montage (10) prévu pour permettre la fixation de l'élément dépliant (1) dans au moins une première position inactive et dans au moins une deuxième position déployée, le dispositif d'affichage étant prévu de sorte que l'élément dépliant (1) suit un mouvement de l'élément dépliant (1) entre ses première et deuxième positions, le mouvement de l'élément dépliant (1) comprenant au moins partiellement une part translative et une part rotative, dont l'élément de montage (10) comprend un élément élastique (4) et un élément de positionnement (3), l'élément élastique (4) exerçant une force d'appui entre l'élément dépliant (1) d'un côté et l'élément de positionnement (3) de l'autre côté.

2. Dispositif d'affichage selon la revendication 1, **caractérisé en ce que** l'élément de positionnement (3) suit un mouvement essentiellement translatif entre les première et deuxième positions de l'élément dépliant (1), notamment un mouvement translatif le long d'une tige filetée (34).

3. Dispositif d'affichage selon l'une quelconque des revendications précédentes, **caractérisé en ce que** l'élément de positionnement (3) a un premier lien articulé (31) avec l'élément dépliant (1).

4. Dispositif d'affichage selon l'une quelconque des revendications précédentes, **caractérisé en ce que** l'élément de montage (10) comprend un premier élément de guidage (6), notamment en forme de rampe, et **en ce que** l'élément de montage (10) comprend un deuxième élément de guidage (5), notamment en forme de galet.

5. Dispositif d'affichage selon l'une quelconque des revendications précédentes, **caractérisé en ce que** l'élément de montage (10) comprend un troisième élément de guidage (8), notamment en forme de goujon d'accrochage, et **en ce que** l'élément de montage (10) comprend un quatrième élément de guidage (7), notamment en forme de crochet.

6. Dispositif d'affichage selon l'une quelconque des revendications précédentes, **caractérisé en ce que** le deuxième élément de guidage (5) a un deuxième lien articulé (32) avec l'élément dépliant (1) et/ou que le quatrième élément de guidage (7) a un troisième lien articulé (33) avec l'élément dépliant (1).

7. Dispositif d'affichage selon l'une quelconque des revendications précédentes, **caractérisé en ce que** le mouvement de l'élément dépliant (1) a une part rotative moins importante et une part translative plus importante près de la première position de l'élément dépliant (1) et **en ce que** le mouvement de l'élément dépliant (1) a une part rotative plus importante et une part translative moins importante près de la deuxième position de l'élément dépliant (1).

8. Dispositif d'affichage selon l'une quelconque des revendications précédentes, **caractérisé en ce que** l'élément dépliant (1) est un miroir dépliant.

9. Dispositif d'affichage selon l'une quelconque des revendications précédentes, **caractérisé en ce que** le dispositif d'affichage comprend un élément d'entraînement (35), notamment un moteur électrique qui entraîne en rotation une tige filetée (34) pour positionner l'élément dépliant (1).

## Patentansprüche

1. Head-up-Anzeigevorrichtung, insbesondere für ein Kraftfahrzeug, die ein ausklappbares Element (1) enthält, wobei die Anzeigevorrichtung ein Montageelement (10) enthält, das vorgesehen ist, um die Befestigung des ausklappbaren Elements (1) in mindestens einer ersten inaktiven Stellung und in mindestens einer zweiten ausgeklappten Stellung zu erlauben, wobei die Anzeigevorrichtung so vorgesehen ist, dass das ausklappbare Element (1) einer Bewegung des ausklappbaren Elements (1) zwischen seiner ersten und seiner zweiten Stellung folgt, wobei die Bewegung des ausklappbaren Elements (1) zumindest zum Teil einen translatorischen Teil und einen rotatorischen Teil enthält, wobei das Montageelement (10) ein elastisches Element (4) und ein Positionierelement (3) enthält, wobei das elastische Element (4) eine Auflagekraft zwischen dem ausklappbaren Element (1) einerseits und dem Positionierelement (3) andererseits ausübt.

2. Anzeigevorrichtung nach Anspruch 1, **dadurch gekennzeichnet, dass** das Positionierelement (3) einer im Wesentlichen translatorischen Bewegung zwischen der ersten und der zweiten Stellung des ausklappbaren Elements (1) folgt, insbesondere einer translatorischen Bewegung entlang einer Gewindestange (34).

3. Anzeigevorrichtung nach einem der vorhergehenden Ansprüche, **dadurch gekennzeichnet, dass** das Positionierelement (3) eine erste Gelenkverbindung (31) mit dem ausklappbaren Element (1) hat.

4. Anzeigevorrichtung nach einem der vorhergehenden Ansprüche, **dadurch gekennzeichnet, dass** das Montageelement (10) ein erstes Führungselement (6), insbesondere in Form einer Rampe, enthält, und dass das Montageelement (10) ein zweites Führungselement (5), insbesondere in Form einer Rolle, enthält.

5. Anzeigevorrichtung nach einem der vorhergehenden Ansprüche, **dadurch gekennzeichnet, dass** das Montageelement (10) ein drittes Führungselement (8), insbesondere in Form eines Befestigungsbolzens, enthält, und dass das Montageelement (10) ein viertes Führungselement (7), insbesondere in Form eines Hakens, enthält.

6. Anzeigevorrichtung nach einem der vorhergehenden Ansprüche, **dadurch gekennzeichnet, dass** das zweite Führungselement (5) eine zweite Gelenkverbindung (32) mit dem ausklappbaren Element (1) hat, und/oder das vierte Führungselement (7) eine dritte Gelenkverbindung (33) mit dem ausklappbaren Element (1) hat.

7. Anzeigevorrichtung nach einem der vorhergehenden Ansprüche, **dadurch gekennzeichnet, dass** die Bewegung des ausklappbaren Elements (1) einen weniger großen rotatorischen Teil und einen größeren translatorischen Teil nahe der ersten Stellung des ausklappbaren Elements (1) hat, und dass die Bewegung des ausklappbaren Elements (1) einen größeren rotatorischen Teil und einen weniger großen translatorischen Teil nahe der zweiten Stellung des ausklappbaren Elements (1) hat.

8. Anzeigevorrichtung nach einem der vorhergehenden Ansprüche, **dadurch gekennzeichnet, dass** das ausklappbare Element (1) ein ausklappbarer Spiegel ist.

9. Anzeigevorrichtung nach einem der vorhergehenden Ansprüche, **dadurch gekennzeichnet, dass** die Anzeigevorrichtung ein Antriebselement (35), insbesondere einen Elektromotor, enthält, das eine Gewindestange (34) in Drehung versetzt, um das ausklappbare Element (1) zu positionieren.

## Claims

1. Head-up display device, particularly for a motor vehicle, comprising a folding element (1), the display device comprising a mounting element (10) provided such that the folding element (1) can be attached in at least a first inactive position and in at least a second deployed position, the display device being provided such that the folding element (1) follows a folding-element movement between its first and second positions, the movement of the folding element (1) being at least partly in translation and partly in rotation, wherein the mounting element (10) comprises an elastic element (4) and a positioning element (3), the elastic element (4) exerting a pressing force between the folding element (1) on one side and the positioning element (3) on the other side.

2. Display device according to Claim 1, **characterized in that** the positioning element (3) moves essentially in translation between the first and second positions of the folding element (1), and in particular moves in translation along a threaded rod (34) .

3. Display device according to either of the preceding claims, **characterized in that** the positioning element (3) has a first articulated connection (31) with the folding element (1).

4. Display device according to any one of the preceding claims, **characterized in that** the mounting element (10) comprises a first guiding element (6), in particular in the form of a ramp, and **in that** the mounting element (10) comprises a second guiding element (5), in particular in the form of a roller.

5. Display device according to any one of the preceding claims, **characterized in that** the mounting element (10) comprises a third guiding element (8), in particular in the form of a latching lug, and **in that** the mounting element (10) comprises a fourth guiding element (7), in particular in the form of a hook.

6. Display device according to any one of the preceding claims, **characterized in that** the second guiding element (5) has a second articulated connection (32) with the folding element (1) and/or that the fourth guiding element (7) has a third articulated connection (33) with the folding element (1).

7. Display device according to any one of the preceding claims, **characterized in that**, when the folding element (1) is close to its first position, it moves in rotation less than in translation, and **in that**, when the folding element (1) is close to its second position, it moves in rotation more than in translation.

8. Display device according to any one of the preceding claims, **characterized in that** the folding element (1) is a folding mirror.

9. Display device according to any one of the preceding claims, **characterized in that** it comprises a drive element (35), in particular an electric motor which turns a threaded rod (34) so as to position the folding element (1).
